# EUROPEAN PATENT SPECIFICATION

(11) **EP 2 866 398 B1**
(45) Date of publication and mention of the grant of the patent: **01.03.2017**
(21) Application number: 13290258.6
(22) Date of filing: 28.10.2013
(51) Int. Cl.: H04L 12/933

(54) **Data transmission system providing improved failure resilience**
Datenübertragungssystem mit verbesserter Ausfallsicherheit
Système de transmission de données assurant une meilleure résilience de défaillance

(43) Date of publication of application: 29.04.2015
(73) Proprietor: ALCATEL LUCENT, 92100 Boulogne-Billancourt (FR)
(72) Inventor: Modena, Marco, 20059 Vimercate, MI (IT); Ruggi, Flavio, 20059 Vimercate, MI (IT)
(74) Representative: Wetzel, Emmanuelle

(56) References cited:
- EP-A2- 1 526 690
- WO-A1-00/76156
- WO-A1-03/094446
- US-A1- 2005 089 049

## Description

The present document relates to data transmission systems. In particular, the present document relates to a data transmission system providing improved failure resilience.

Typically, data transmission systems are used to transmit data between multiple end-users. For example, a data transmission system may be configured to transmit data relating to a plurality of Ethernet services between a plurality of end-users. In order to avoid loss of data due to an occurring failure situation, data transmission systems provide protection mechanisms for rerouting the data. For example, the data transmission system may comprise at least one standby transmission path which can be used for data transmission in case that an active transmission path is corrupted. Currently available protection mechanisms are configured to handle certain failure situations, but are not able to solve more complex breakdowns within the data transmission system.

European patent application EP 1 526 690 A2 discloses a system and a method for sending and receiving information in a network using a redundant switching architecture.

Hence, there is a need to provide for an improved transmission system with improved failure resilience in order to avoid loss of data. Similarly, a method for transmitting data through a transmission system with improved failure resilience is desired.

According to a first aspect, a transmission system for transmitting data is described. The transmission system comprises an Ethernet network portion, a transport network portion and a switching component coupling said Ethernet network portion with said transport network portion. The Ethernet network portion comprises at least two Ethernet line cards, each Ethernet line card with at least one Ethernet interface, thereby providing redundant communication links within the Ethernet network portion. The Ethernet line cards may be adapted to exchange Ethernet data packets with external equipment, for example a router, a switch or a base station. In a link aggregation configuration, at least two Ethernet interfaces are connected to the same external equipment to provide for redundancy and failover. Typically, said Ethernet data packets are transmitted as asynchronous data packets. By means of the Ethernet line cards, the Ethernet data packets may be converted in a synchronous stream of data units arranged in a higher level frame structure, for example, using generic framing procedure (GFP). The switching component forms an interface module, which comprises a plurality of ports wherein a first set of ports is connected to the Ethernet network portion and a second group of ports is connected to the transport network portion. The switching component is adapted to arrange connections between certain ports of the first set with certain ports of the second set in order to provide a desired routing of data from the Ethernet network portion to the transport network portion and - vice versa - from the transport network portion to the Ethernet network portion.

The Ethernet line cards are configured to transmit information regarding the link status of their at least one Ethernet interface(s) to the switching component. The information regarding the Ethernet interface link status may be indicative for the current physical link status of said Ethernet interface, for example active, standby or corrupted/failure. The switching component is configured to receive and analyze said information regarding the link status of the Ethernet interfaces of the Ethernet line cards and route the data to the transport network portion based on said received information. In other words, the switching component is adapted to set the switching state between the first set of ports connected to the Ethernet network portion and the second set of ports connected to the transport network portion according to the received information regarding the link status of the Ethernet interfaces of the Ethernet line cards.

According to embodiments, the Ethernet line cards may comprise a link monitoring component adapted to monitor the link status of the at least one Ethernet interface, e.g. the physical status of an Ethernet link attached to an Ethernet interface, The link monitoring component may be configured to determine the Ethernet interface status as well as configured to decide into which status the Ethernet interface should be transferred, if necessary. The link monitoring component may be configured to process e.g. link aggregation group (LAG) protocol messages (according to Link Aggregation Control Protocol (LACP) for Ethernet defined in **IEEE 802.1ax** or the previous **IEEE 802.3ad,** both incorporated by reference) in order to coordinate the status of the at least one Ethernet interface with other entities, for example, other Ethernet line cards or external equipment, for example, a router, a switch or a base station etc. in order to choose the appropriate state of the Ethernet interface. So, the link monitoring component maybe adapted to exchange information regarding the link status of the at least one Ethernet interface with the at least one further Ethernet line card. Typically, the link monitoring component of the first Ethernet line card may exchange information with the link monitoring component of the second Ethernet line card in order to exchange link status information of the Ethernet interfaces. In addition, the link monitoring component of the Ethernet line card may be adapted to negotiate the link status of the Ethernet interface with the link monitoring component of another Ethernet line card (e.g. using the above mentioned LACP) in order to coordinate the status of the Ethernet interfaces between different Ethernet line cards.

According to further embodiments, an Ethernet line card may comprise a mapper component adapted to map Ethernet data into synchronous data units. Preferably, the Ethernet data form an asynchronous data stream. In an upstream direction (from the Ethernet network portion to the transport network portion), said asynchronous data stream may be encapsulated by the mapper component and mapped into a higher-level framing structure, for example, virtual containers (VCn) in case of SDH/SONET transport network or an optical channel data unit (ODU) in case of WDM transport network. Said generated synchronous data units may be provided to the switching component for switching to a port of the transport network portion, and for further transmission. In downstream direction (from the transport network portion to the Ethernet network portion), the mapper may be adapted to convert the synchronous data units received in a higher-level frame structure, for example, virtual containers (VCn) or an optical channel data unit (ODU), into Ethernet packets by appropriate mapping and decapsulating.

According to further embodiments, the mapper component may be configured to receive information regarding the link status of the at least one Ethernet interface from the link monitoring component and may embed said information into the overhead section of the data units to be transmitted to the switching component. In other words, the link status information is provided to the switching component using in-band communication. Alternatively, other communication mechanisms may be possible to provide the link status information to the switching component. The switching component may be adapted to extract said information regarding the status of the at least one Ethernet interface out of the overhead of the data units and route the data units to the transport network portion based on said extracted information. Specifically, the switching component may choose a port coupled with a transmission path of the transport network based on said extracted information.

According to further embodiments, the transport network portion may comprise at least two redundant transmission paths. The transport network portion may comprise a path protection mechanism providing information regarding the status of the transmission paths. The transport network portion may comprise line cards, specifically SDH (synchronous digital hierarchy)/OTH (optical transport hierarchy) line cards. Said line cards can be configured to support SDH/OTH path protection mechanisms like SNCP (sub-network connection protection). Said path protection mechanism may be adapted to route data through a redundant transmission path in case of a failure situation on the side of the transport network. For re-routing, status information correlated with the status of the transmission paths are generated.

According to further embodiments, the path protection mechanism of the transport network portion may be adapted to provide information regarding the status of the transmission paths to the switching component in order to select the appropriate transmission path for routing the data. The status information may be transmitted to the switching component using in-band communication, i.e. adding the status information as a data overhead to the payload data being transmitted between the transport network portion and the switching component. Thereby, the switching component gets informed about the status of the transmission paths. The switching of data from the Ethernet network portion to the transport network portion may be performed based on said received status information.

According to further embodiments, the switching component may be adapted to evaluate the information regarding the status of the transmission paths and/or the information regarding the status of the at least one Ethernet interface in order to choose an appropriate switching state of the switching component, e.g. select a state for a switching matrix. In other words, the switching component may select a switching state of a switching matrix based on the information regarding the status of the transmission paths and the information regarding the link status of the at least one Ethernet interface. So, after link status information regarding the Ethernet interfaces and status information regarding the transmission paths has been transmitted to the switching component, said switching component has knowledge about the status of the Ethernet interfaces, respectively, the status of the transmission paths. Using said information, the switching component is able to route data between the Ethernet network portion and the transport network portion on correctly working (active) Ethernet interfaces, respectively, transmission paths, thereby increasing the failure resilience even in multiple failure scenarios. In other words, the switching state of the switching component defining the coupling of ports connected with the Ethernet network portion and ports connected with the transmission network portion is defined based on the link status of the Ethernet interfaces and the status of the transmission paths.

According to further embodiments, information regarding the link status of an Ethernet interface of the Ethernet network portion may be provided to a path protection component of the transport network portion in order to influence the selection of an appropriate transmission path for routing the data. The path protection component may be adapted to perform a path protection mechanism within the transport network portion. By providing information regarding the link status of the Ethernet interfaces to the transport network portion, the path protection mechanism of the transport network portion may take the Ethernet interface status into account while determining an appropriate routing through the transport network portion. Said status information may be transferred to the path protection component using in-band communication, i.e. adding said status information as data overhead the payload data being transmitted between the Ethernet network portion and the transport network portion. Alternatively, independent, separate transmission of the status information may be possible. For example, based on the link status information of the Ethernet interfaces, the path protection mechanism of the transport network portion may be triggered to use a certain transmission path in order to avoid loss of data. In other words, the path protection mechanism may be coupled with the link protection mechanism of the Ethernet network portion in order to ensure improved failure resilience.

Similarly, information regarding the status of the transmission paths of the transport network portion may be provided to the link protection components of the Ethernet line cards in order to influence the switching status of the Ethernet line cards. By providing information regarding the status of the transmission paths to the transport network portion, the link protection components, respectively, the link protection mechanism of the Ethernet network portion may take the transmission path status into account while determining an appropriate routing through the Ethernet network portion. Said status information maybe transferred to the link protection components using in-band communication, i.e. adding said status information as data overhead the payload data being transmitted between the transport network portion and the Ethernet network portion. Alternatively, independent, separate transmission of the status information may be possible. For example, based on the status information of the transmission paths, the link protection mechanism of the Ethernet network portion may be triggered to use a certain Ethernet interface in order to avoid loss of data. In other words, the link protection mechanism of the Ethernet network portion may be coupled with the path protection mechanism of the transport network portion in order to ensure improved failure resilience. Preferably, a bi-directional coupling between the link protection mechanism of the Ethernet network portion and the path protection mechanism of the transport network portion is performed.

According to a further aspect, a method for transmitting data using a transmission system is described. The transmission system comprises an Ethernet network portion, a transport network portion and a switching component coupling said Ethernet network portion with said transport network portion. The Ethernet network portion comprises at least two Ethernet line cards, each Ethernet line card with at least one Ethernet interface, for providing redundant communication paths within the Ethernet network portion. According to a method step, information regarding the link status of the at least one Ethernet interface (indicating e.g. if the link and the corresponding interface is active, in standby, or has a failure) is transmitted from the Ethernet line card to the switching component. Subsequently, the information regarding the link status of the at least one Ethernet interface is received and analyzed by the switching component and payload data is routed by the switching component to the transport network portion based on said received information.

According to further embodiments, the Ethernet line cards may monitor the status of the at least one Ethernet interface using e.g. a link monitoring component, and the at least two Ethernet line cards may exchange information regarding the link status of their at least one Ethernet interface. The link monitoring component may determine the Ethernet interface status as well as decide into which status the Ethernet interface should be transferred. The link monitoring component may process link aggregation control protocol (LACP) messages in order to coordinate the status of the at least one Ethernet interface with other entities, for example, other Ethernet line cards or external equipment, for example, a router, a switch or a base station etc. in order to choose the appropriate state of the Ethernet interface.

According to further embodiments, a Ethernet line card may comprise a mapper component to map the Ethernet data into synchronous data units and the mapper component receives information regarding the status of the at least one Ethernet interface from the link monitoring component and embed said received information into the overhead of the data units. By means of the mapper, the Ethernet data forming an asynchronous data stream may be encapsulated in an upstream direction by the mapper component and mapped into a higher-level framing structure, for example a virtual containers (VCn) or an optical channel data unit (ODU). In downstream direction, the mapper may convert the synchronous data units received in a higher-level frame structure into Ethernet packets by appropriate mapping and decapsulating. The status information of the Ethernet interfaces may be provided to the switching component using in-band communication.

According to further embodiments, the switching component extracts the received information regarding the status of the at least one Ethernet interface out of the overhead of the data units and routes the data units to the transport network portion based on said extracted information. For example, the switching component performs a switching of data received at a port of the switching component which is correlated with an active Ethernet interface to a respective port of the switching component correlated with the transmission path on which the data should be transmitted through the transmission network portion based on said received information.

The transport network portion comprises at least two redundant transport network interfaces for providing redundant transmission paths. The method may further comprise determining information regarding the status of the transport network interfaces and selecting a transmission path for routing of data by the switching component based on information regarding the status of the transport network interfaces.

Furthermore, the switching component may evaluate the information regarding the status of the transport network interfaces and the information regarding the link status of the at least one Ethernet interface in order to choose an appropriate switching state.

The method may further comprise forwarding information regarding the link status of at least one of the Ethernet interfaces of the Ethernet network portion to the path protection component of the transport network portion and selecting an appropriate transmission path based on the information regarding the link status of an Ethernet interface,

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Further, if not explicitly indicated otherwise, embodiments of the invention can be freely combined with each other.

The invention is explained below in an exemplary manner with reference to the accompanying drawings, wherein
- Fig. 1: illustrates an example schematic representation of a data transmission system;
- Fig, 2: illustrates an example schematic representation of an Ethernet line card;
- Fig. 3: illustrates an example schematic representation of an Ethernet network portion and a switching component of an example transmission system;
- Fig. 4: illustrates an example schematic representation of the switching component and a transport network portion of a transmission system;
- Fig. 5: illustrates an example schematic representation of the exchange of status information in the data transmission system;
- Fig. 6: illustrates a further embodiment of the data transmission system according to fig. 1;
- Fig. 7: shows a schematically illustration of the switching means included in the data transmission system; and
- Fig. 8: shows an example schematic representation of a network scenario including the data transmission system.

The present invention is particularly useful for MSSP (Multi Service Switching Platform) equipment that is an evolution of the ADM (Add Drop Multiplex) concept. MSSP is conceived as an upgrade to SDH/Sonet or OTH to allow transport of various types of layer-2 clients: ATM, FiberChannel, DVB, and Ethernet. Typically, layer-2 (L2) and SDH/OTH functionalities are only loosely coupled. Conventional implementations offer blades (line cards) with Ethernet interfaces, some L2 functions (performance monitoring, filtering, aggregation, bridging protocols...). However, these functionalities are not shared with other similar blades and are not integrated with SDH/OTH data plane and management. L2 traffic is encapsulated in SDH/OTH containers, with different techniques for bandwidth optimization (e.g. Virtual Concatenation) and for frame delineation (e.g. GFP). Traffic coupled by Ethernet interfaces is connected to MSSP matrixes with the same methods used by conventional SDH/OTH blades. For L2 switches, link aggregation group (LAG) is the most common protocol that allows to increase the bandwidth and to handle service interfaces that fail. In SDH/OTH mechanism like SNCP exist to protect interfaces and paths. These mechanism are however completely separate and not connected.

According to a broad aspect, Ethernet line protection (such as LAG 1+1) is combined with transport network path protection to achieve multiple failure resilience, including hardware failures. This is particular useful for MSSP equipment which generally comprises Ethernet line cards (n x FE, n x GBE, 10GBE) that typically implement the physical connection to external router or switch or base station or other equipment for connection to end customers (ADSL, FTH...), Layer 2 functions, GFP mapping, and mapping of traffic on Virtually Concatenated VC group or mapping on ODUn (n=flex, 0, 1, 2). Once mapped on VCs/ODUn, the traffic is forwarded to a matrix switch to be further routed to an OTH/SDH line card. To protect both, the Ethernet connection and against equipment failure, a combination of LAG 1+1, implemented on two Ethernet line cards, and OTH/SDH path protection mechanism, e.g. SNCP, is suggested. The two Ethernet line cards map Ethernet frames e.g. on VC groups whose members are protected 1-to-1 across the two line cards. In case of OTH, the ODUn path is protected 1-to-1 as well across the OTH line cards.

In embodiments, the LAG 1+1 mechanism may allow only one interface to be active for traffic at any given moment. The corresponding VC group has all of its members in"active" state, while the other redundant group has all of the members in "stand-by" state. If the active Ethernet interface fails, the LAG mechanism switches the active traffic on the other interface, and also the protection state of the VC group members/ODUn is switched. In case the active line card fails, the same mechanism is applied: LAG and VC groups/ODUn are switched to connect the working Ethernet line card to the matrix. The mechanism is very efficient for line cards that implement several Ethernet interfaces: by implementing LAG 1+1 on corresponding interfaces of different line cards (or also 2+2 or n+n), it is possible to protect a connection without impacting other live traffic. In case of multiple failures that do not affect all of the interfaces used for a connection, it is always possible to recover the traffic,

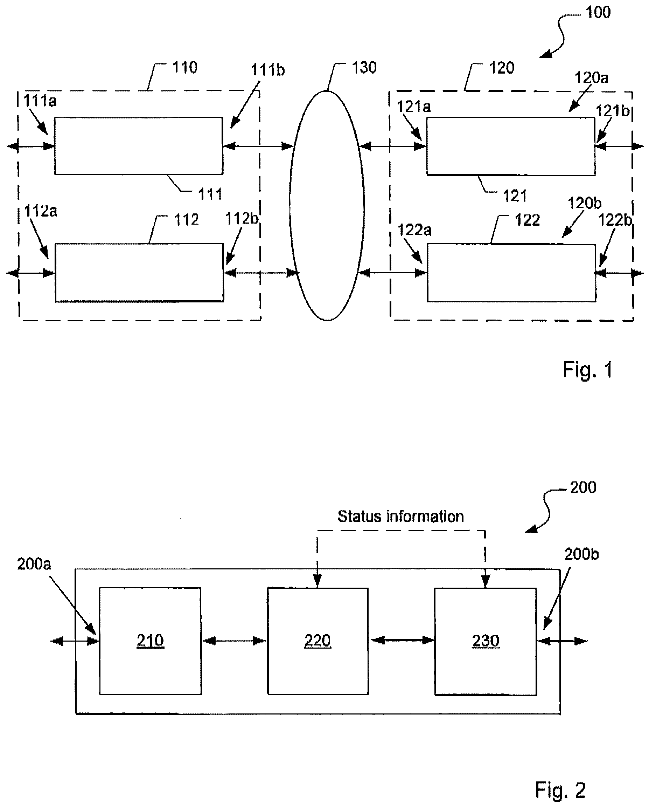

Fig. 1 shows a schematic structure of a data transmission system 100. The transmission system 100 comprises an Ethernet network portion 110, a transport network portion 120 and a switching component 130. The switching component 130 provides a first interface for coupling with the Ethernet network portion 110 and a second interface for coupling with the transport network portion 120. The switching component 130 is adapted to establish connections between the Ethernet network portion 110 and the transport network portion 120. Said switching component 130 may be a switching matrix, specifically a Multi Service Switching Platform (MSSP) adapted to switch a plurality of services,

The Ethernet network portion 110 comprises at least two Ethernet line cards 111, 112, each Ethernet line card 111, 112 being adapted to handle at least one Ethernet link. Each Ethernet line card 111, 112 comprise at least a first interface 111a, 112a correlated with a certain Ethernet link. By means of said first interface 111a, 112a, the physical connection to external equipment realizing the connection to end customers, for example an external router, an external switch or a base station is established. The data transported via said first interface 111a, 112a are Ethernet data, i.e. asynchronous Ethernet packets. Each Ethernet line card 111, 112 further comprises at least one second interface 111b, 112b for coupling with the switching component 130.

The transport network portion 120 comprises at least two transmission paths 120a, 120b for providing redundancy. Each transmission path may comprise a line card 121,122, for example a STMn line card (STM: synchronous transport mode) or an OTH line card (OTH: optical transport hierarchy) dependent on the transport network and the medium transporting the data (electrical link or optical link). Each line card 121, 122 comprises a first and the second interface 121a, 121b, 122a, 122b. By means of the first interfaces 121a, 122a, the line cards are coupled with ports of the switching component 130. The line cards 121, 122 may receive data units from the switching component 130 and convert the received data units into a format suitable for further transmissions through the transport network.

The system of Fig. 1 can receive client data via redundant Ethernet interfaces 111a, 112a and forward the client data to the transport network via redundant transport network interfaces 121b, 122b, and vice versa, thereby providing a failsafe transmission system, By combining information about the status of the Ethernet interfaces 111a, 112a with information about the status of the transport network interfaces 121b, 122b, the switching component 130 can intelligently route traffic so as to accommodate equipment and link failures.

In general, the good/active SDH/OTH path is selected by the switching matrix and respective information is sent to the Ethernet Ports. Preferably, the Ethernet port status is influenced by Ethernet link status and Ethernet Line Card status.

Fig. 2 shows a schematic diagram of an example Ethernet line card 200. All Ethernet line cards comprised within the Ethernet network portion 110 may comprise the same basic structure as described in the following. The Ethernet line card 200 may comprise a physical layer component 210 providing a first interface 200a as an Ethernet interface, i.e, the physical connection to external equipment realizing the coupling to the end-user. Said external equipment maybe formed by a router, a switch, a base station, etc... In other words, the physical layer component may receive data, specifically Ethernet packet data from the end-user in an upstream direction, and transmit Ethernet packet data to the end-user in a downstream direction,

The Ethernet line card 200 further comprises a link monitoring component 220. The link monitoring component 220 is coupled with the physical layer component 210 for bidirectional exchange of data. The link monitoring component 220 is adapted to monitor the at least one Ethernet interface provided by the Ethernet line card 200, respectively, the Ethernet link established by means of the Ethernet line card 200. The link monitoring component 220 may be adapted to determine the link status of the Ethernet interface, respectively, the Ethernet link provided by the Ethernet line card 200, for example, determining if the status is active, standby or faulty. The link monitoring component 220 may also provide means for switching said interface status depending on information derived by analyzing the data transported through the Ethernet line card 200 or depending on external information received by the Ethernet line card 200.

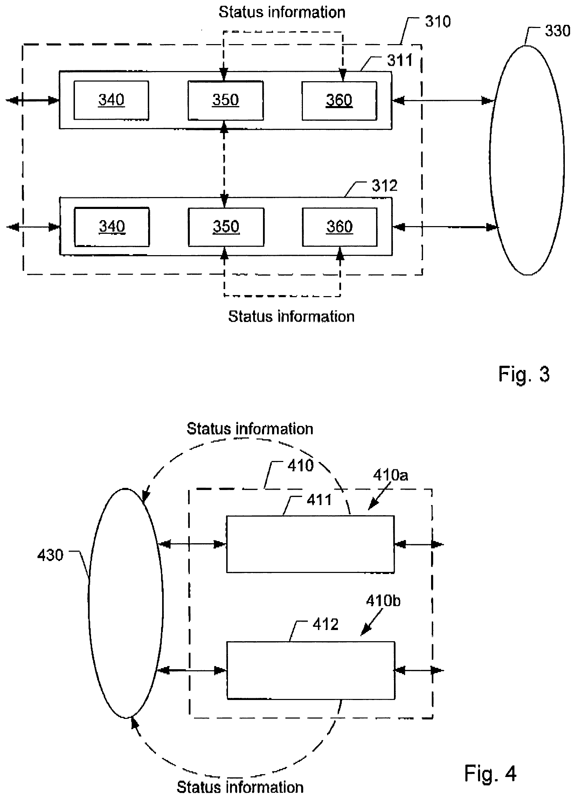

The link monitoring component 220 may implement a link aggregation group (LAG) mechanism. LAG mechanism enables the determination of the status of the Ethernet interface and the exchange of status information between different Ethernet line cards 200, and peer LAG layer components, as described in the following with respect to Fig. 3. In general, N physical interfaces may be attached for a LAG group, of which M<=N may be active at a given time. The link monitoring component 220 may comply with the Link Aggregation Control Protocol (LACP) as defined in IEEE 802.1ax or IEEE 802.3ad.

In order to implement a combined protection mechanism in inbound direction (from Ethernet to Telecom transport network), a mapping function in the Ethernet line card is informed of the Ethernet interface status, by the LAG layer. In case the interface status is stand-by or down (e.g. the line is inactive), the mapping function will mark a container structure (e.g. VCG) with a proprietary in-band indication, like VC-AIS, used locally to trigger the selection of the signal to be sent towards the transport network, In outbound direction, the transport channel not affected by the failure is forwarded to both Ethernet interfaces.

In an example of 2 Ethernet line cards with LAG 1+1 (two attached lines, one active, one stand-by), an indication of the stand-by interface is embedded in the VCG/ODU control layer. The switching matrix selects the active interface for transmission over the transport network. In this example, traffic from the transport network is bi-casted over both Ethernet line cards. In a more complex network scenario, the matrix can signal if traffic is valid (OK) or invalid (KO) to drive the LAG state machine.

In more detail, the Ethernet line card may comprise a mapper component 230 coupled with the link monitoring component 220. The mapper component 230 may be adapted to encapsulate data to be transmitted in the upstream direction and map said encapsulated data into a frame structure, specifically a higher-level frame structure, for example a virtual container (VC), a virtual concatenation group (VCG) or an optical channel data unit (ODU) of an optical transport network (OTN). Thereby, the asynchronous Ethernet data are converted into data units forming a synchronous data stream. In the downstream direction, the data units received in a higher-level frame structure may be converted by the mapper component 230 into Ethernet packet data. In addition, the mapper component 230 may receive information regarding the status of the at least one interface provided by the Ethernet line card 200 (as indicated by the dashed arrow) and add said received information into the data stream to be output at the second interface 200b. The received information may be included in an overhead portion of the data units generated by the mapper component 230. As already mentioned above, the output data stream in the upstream direction may be synchronous data units, for example a data stream comprising data units according to the VCG or ODU frame structure. By means of the received information regarding the link status of the Ethernet interface, the mapper component may mark the frame structure containing data of the respective Ethernet interface according to said status, for example, using an in-band indicator attached to the VCG or ODU frame structure in order to inform the switching component 130 about the interface status and thereby enable the switching component 130 to trigger the selection of data to be forwarded towards the transport network portion 120 based on said link status information.

Fig. 3 shows a schematic diagram of an example Ethernet network portion 310 with two Ethernet line cards 311, 312 coupled to the switching component 330.
As described in conjunction with Fig. 2 above, each Ethernet line card 311, 312 comprise a physical layer component 340, a link monitoring component 350 and a mapper component 360. The link monitoring component 350 may support or implement link aggregation group (LAG) mechanism in order to monitor the physical status of the Ethernet interface. The Ethernet line cards 311, 312 may be coupled in order to exchange information regarding the status of the Ethernet interfaces provided by the respective Ethernet line cards 311, 312. In addition, the link protection components 350 may interact with each other and with external components, for example a router, a switch or a base station, in order to define the status of (redundant available) Ethernet interfaces. Said interaction may be performed by using LACP. In case that all Ethernet interfaces are working correctly, the link protection components 350 determine which interface enters the standby mode and which interface is active. In case that an interface of the Ethernet line cards 311, 312 fails or one of the Ethernet line cards 311, 312 is corrupted/failed, the link protection components 350 may route the data through alternative Ethernet interface(s) using an updated Ethernet interface configuration.

Fig. 4 shows a schematic diagram of an example transport network portion 410 with two transport network line cards 411, 412 coupled to the switching component 430. Each line card 411, 412 may be used for providing an independent transmission path 410a, 410b through the transport network portion 410 and is connected to a respective link of the transport network. Said multiple transmission paths 410a, 410b may provide redundancy for ensuring an alternative transmission path 410a, 410b in case of failure situations. In order to protect the transport network portion 410 against breakdown due to failure situations, the line cards 411, 412, which may be SDH or OTH line cards, may provide a protection mechanism, for example a subnetwork connection protection (SNCP) mechanism. Said protection mechanism may provide a 1+1 protection scheme, i.e. one working transmission path 410a is protected by a further transmission path 410b which is driven in standby mode. In other words, the protection mechanism of the transport network portion 410 may provide path protection as an end-to-end protection.

The protection mechanism of the transport network portion 410 may be adapted to provide information regarding the current status of the transmission paths 410a, 410b (e.g. active, standby, corrupted/failure). Said status information may be transmitted from the line cards 411, 412 to the switching component 430. Thereby, the switching component 430 receives information regarding the status of the respective transmission path 410a, 410b (active, standby, corrupted) which can be used in case of a failure situation for properly switching the traffic received from the Ethernet network portion to a correctly working transmission path 410a, 410b.

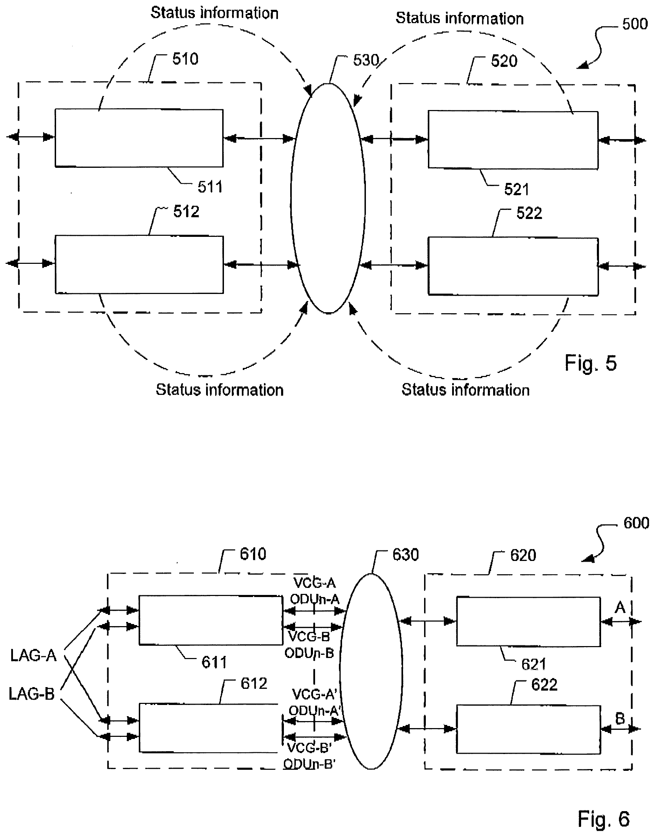

Fig. 5 shows a schematic diagram of an example data transport system 500 comprising an Ethernet network portion 510 with two Ethernet line cards 511, 512, a transport network portion 520 with two transport network line cards 521, 522 and a switching component 530.

The Ethernet line cards 511, 512 are adapted to report status information of their Ethernet interfaces or Ethernet links to the switching component 530 (as indicated by the dashed lines). As already mentioned above, the status information may be provided to the switching component 530 using in-band communication, i.e. embedding said status information in a data overhead of the data transmitted from the Ethernet network portion to the switching component 530. In addition, the transport network line cards 521, 522 of the transport network portion 520 may also provide information regarding the status of the transmission paths provided by the respective line cards 521, 522 to the switching component 530 (as indicated by the dashed lines).

The switching component 530 may comprise a control mechanism in order to route the data received from the Ethernet network portion 510 to the transport network portion 520 and - vice versa - from the transport network portion 520 to the Ethernet network portion 510 according to the status of the Ethernet interfaces and the status of the transmission paths, The switching component 530 may be configured to analyze the status information of the Ethernet interfaces and the status information of the transmission paths. Based on said status information the switching component 530 may derive a switching command. Said switching command may be provided to a switching unit of the switching component 530 which performs a routing of traffic to the respective ports which are connected to the active, respectively, correctly working Ethernet link of the Ethernet network portion or the correctly working transport network transmission path. By coordinating the status information of the Ethernet interfaces and the status of the transmission paths an appropriate switching of data even in multiple failure cases is possible, i.e. the resilience of the transmission system is increased.

Alternatively or in addition, it may be also possible to exchange status information between the Ethernet network portion 510 and the transport network portion 520 in order to inform the path protection mechanism of the transport network portion 520 regarding the status of the Ethernet interfaces of the Ethernet network portion 510. By coupling or coordinating control information of the link protection mechanism of the Ethernet network portion 510 and of the path protection mechanism of the transport network portion 520 it is possible to consider the status of the Ethernet interfaces of the Ethernet network portion 510 when making switching decisions regarding ports of the transport network portion 520. For example, it is possible to switch the traffic across a certain transmission path of the transport network portion 520 based on the status of the Ethernet interfaces.

Fig. 6 shows a schematic diagram of a further embodiment of the data transmission system 600. Similarly to the embodiment according to Fig. 5 described above, the transmission system 600 comprises an Ethernet network portion 610, a transport network portion 620 and a switching component 630 coupling said Ethernet network portion 610 and said transport network portion 620. The Ethernet network portion 610 comprises two Ethernet line cards 611, 612 connected to the switching component 630 in a parallel connection in order to provide redundancy. In contrast to the embodiments described above, each Ethernet line card 611, 612 comprises multiple Ethernet interfaces. For example each Ethernet line card provides two Ethernet interfaces connected to different clients or services which can be handled simultaneously by the respective Ethernet line card. Of course, each Ethernet line card 611,612 can also provide more than two Ethernet interfaces, in general n Ethernet interfaces, wherein n ∈ N. The set of Ethernet line cards 611, 612 may receive multiple Ethernet services. Dependent on the status of the Ethernet line cards and the transmission paths, the multiple Ethernet services may be distributed over the plurality of Ethernet interfaces provided by the Ethernet line cards 611, 612. For example, two Ethernet services may be distributed among four Ethernet interfaces provided by a pair of Ethernet line cards 611, 612. According to an embodiment, each Ethernet line card 611, 612 may provide an active Ethernet interface and a stand-by Ethernet interface, i.e. the two Ethernet services are transmitted via distinct Ethernet line cards 611, 612. In case of interface failure, the service can be switched to the stand-by Ethernet interface of the same Ethernet line card 611, 612. According to a further embodiment shown in Fig. 6, the link protection mechanism uses two link aggregation groups LAG-A and LAG-B implemented on the Ethernet line cards 611, 612, thereby implementing a LAG 1+1 mechanism. The active Ethernet interfaces (A, B) may be implemented by a single Ethernet line card 611 providing active virtual concatenation groups (VCG-A, VCG-B) or optical channel data units (ODU-A, ODU-B), whereas the further Ethernet line card 612 provides standby Ethernet interfaces (A', B') and standby virtual concatenation groups (VCG-A', VCG-B') or optical channel data units (ODU-A', ODU-B'). So, even if a complete Ethernet line card 611, 612 is corrupted and fails, both Ethernet services can be handled by the other Ethernet line card 611, 612.

The link protection mechanism of the Ethernet network portion 610 and the path protection mechanism of the transport network portion 620 as well as the mechanism of coordinating said link protection mechanism and said path protection mechanism can be implemented in software. Alternatively, said mechanisms may be implemented in hardware in order to enhance the reaction time of switching a service after the occurrence of a failure.

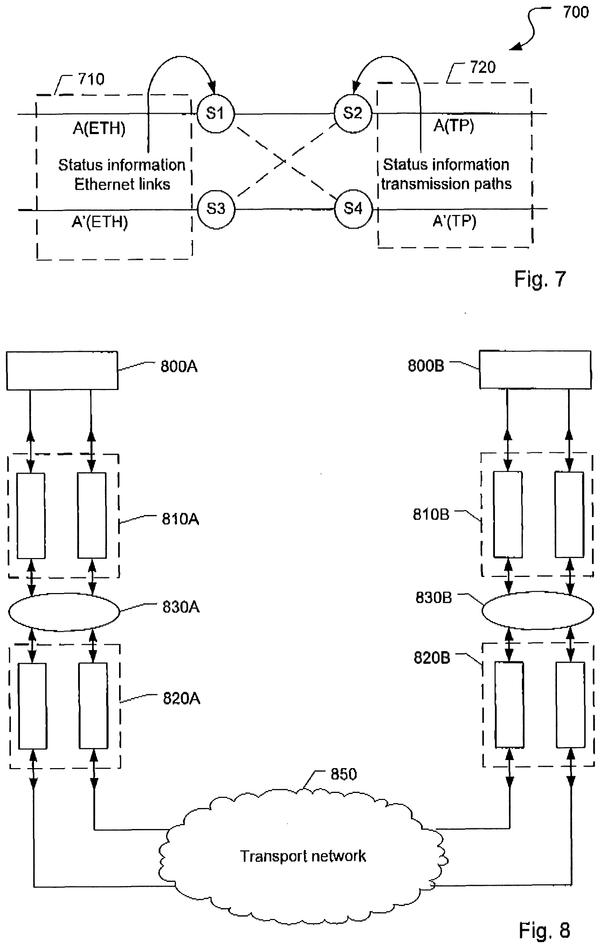

Fig. 7 schematically illustrates the routing or switching to be performed by a transmission system 700. As already described above, the Ethernet network portion 710 and the transport network portion 720 are adapted to exchange information, specifically status information of the Ethernet interfaces, respectively, status information of the transmission paths with the switching component in order to perform an appropriate routing of data. The routing may be performed by selector means S1-S4. Depending of the status information (active; standby) of the Ethernet links A(ETH) and A'(ETH), respectively, the status information (correctly working: ok; failed: ko) of the transport network transmission paths A(TP) and A'(TP), the selector means S 1-S4 perform the following example switching/routing actions:

| | A(ETH): active; A'(ETH): standby; A(TP): ok; A'(TP) ok |
|---|---|
| ETH to TP (upstream) | S1 bridged to S2; S2: don't care; S3: blocked; S4: don't care |
| TP to ETH (downstream) | S1 switched from S2; S2: pass-through; S3: blocked; S4: bridged to S1 |

| | A(ETH): active; A'(ETH): standby; A(TP): ok; A'(TP) ko |
|---|---|
| ETH to TP (upstream) | S1 bridged to S2; S2: don't care; S3: blocked; S4: don't care |
| TP to ETH (downstream) | S1 switched from S2; S2: pass-through; S3: blocked; S4: bridged to S1 |

| | A(ETH): active; A'(ETH): standby; A(TP): ko; A'(TP) ok |
|---|---|
| ETH to TP (upstream) | S1 bridged to S4; S2: don't care; S3: blocked; S4: don't care |
| TP to ETH (downstream) | S1 switched from S4; S2: pass-through; S3: blocked; S4: bridged to S1 |

| | A(ETH): standby; A'(ETH): active; A(TP): ok; A'(TP) ok |
|---|---|
| ETH to TP (upstream) | S1 blocked; S2: don't care; S3: bridged to S2; S4: don't care |
| TP to ETH (downstream) | S1 blocked; S2: bridged to S3; S3: switched from S4; S4: pass-through; |

| | A(ETH): standby; A'(ETH): active; A(TP): ko; A'(TP) ok |
|---|---|
| ETH to TP (upstream) | S1 blocked; S2: don't care; S3: bridged to S2; S4: don't care |
| TP to ETH (downstream) | S1 blocked; S2: bridged to S3; S3: switched from S4; S4: pass-through; |

| | A(ETH): standby; A'(ETH): active; A(TP): ok; A'(TP) ko |
|---|---|
| ETH to TP (upstream) | S1 blocked; S2: don't care; S3: bridged to S2; S4: don't care |
| TP to ETH (downstream) | S1 blocked; S2: bridged to S3; S3: switched from S2; S4: pass-through; |

The proposed usage of combined status information in the switching component provides for failsafe operation, taking into account multiple failures. For example, if Ethernet interface A(ETH) and transport network interface A'(TP) fail in the above example, the switching component can still route traffic between Ethernet interface A'(ETH) and transport network interface A(TP), thereby ensuring safe operation of the data transmission system.

Fig. 8 shows the embedding of a data transmission system according to Fig. 1 or 5 into a network scenario. A first external equipment 800A, for example a router, a switch or a base station, may be coupled with a second external equipment 800B, said external equipments being constituted, for example, by a router, a switch or a base station. The Ethernet network portion 810A, the transport network portion 820A and the switching component 830A provides the coupling of the first external equipment 800A (and thus the clients connected to the external equipment 800A) to the transport network 850. Similarly, the Ethernet network portion 810B, the transport network portion 820B and the switching component 830B provides the coupling of the second external equipment 800B (and thus the clients connected to the second external equipment 800B) to the transport network 850. The Ethernet network portion 810A, the transport network portion 820A and the switching component 830A, respectively, the Ethernet network portion 810B, the transport network portion 820B and the switching component 830B are interacting as described above in order to provide enhanced failure resilience, specifically, multiple failure resilience against failures in the Ethernet network portion and the transport network portion, respectively the transport network 850 (e.g. line cut or fiber cut).

Summing up, a system and a method for improving the failure resilience of a data transmission system has been presented, which merges the protection mechanisms to widen the fault coverage, but without increasing substantially the cost.
By coordinating the protection mechanisms, it is possible to deal with double interface faults on Ethernet side, as well as with transport network faults.

In a simplified form, the coordination mechanism consists in "informing" the LAG state machine in the Ethernet network portion of the status of the path protection mechanism in the transport network portion, in order to switch active traffic on the correct interfaces and, vice versa, to inform the path protection mechanism of the LAG status, in order to allow the use of the correct path according to the LAG status. This protocol can be implemented in software in existing equipment, with non real-time protection speed, or with suitable hardware enhancement with much faster reaction time.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the explicit use of the term "processor" or "computer" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random-access memory (RAM), and non-volatile storage. Other hardware, conventional and/or custom, may also be included.

## Claims

1. Transmission system (100) for transmitting data, comprising an Ethernet network portion (110), a transport network portion (120) and a switching component (130) coupling said Ethernet network portion (110) with said transport network portion (120);
the Ethernet network portion (110) comprising at least two Ethernet line cards (111, 112), each Ethernet line card with at least one Ethernet interface (111a, 112a), for providing redundant communication links within the Ethernet network portion (110);
the Ethernet line cards (111, 112) **characterized by** being configured to transmit information regarding the link status of their at least one Ethernet interface (111a, 112a) to the switching component (130); and the switching component (130) being configured to receive and analyze information regarding the link status of the Ethernet interfaces (111a, 112a) of the Ethernet line cards (111, 112) and route data to the transport network portion (120) based on said received information.

2. The transmission system according to claim 1, wherein the Ethernet line cards (111, 112) each comprise a link monitoring component (220) adapted to monitor the link status of the at least one Ethernet interface.

3. The transmission system according to claim 2, wherein the link monitoring component (220) is adapted to exchange information regarding the link status of the at least one Ethernet interface (111a, 112a) with the at least one further Ethernet line card.

4. The transmission system according to anyone of the preceding claims,
wherein each Ethernet line card (111, 112) comprises a mapper component (230) adapted to map received Ethernet payload data into synchronous data units.

5. The transmission system according to claim 4, wherein the mapper component (230) is configured to receive information regarding the link status of the at least one Ethernet interface (111a, 112a) from the link monitoring component (220) and embed said information into a overhead section of the data units to be transmitted.

6. The transmission system according to claim 5, wherein the switching component (230) is adapted to extract the information regarding the link status of the at least one Ethernet interface (111a, 112a) from the overhead section of the data units and route the data units to the transport network portion (120) based on said extracted information.

7. The transmission system according to anyone of the preceding claims,
wherein the transport network portion (120) comprises at least two redundant transmission paths (120a, 120b), and the transport network portion (120) comprises a path protection component providing a path protection mechanism providing information regarding the status of the transmission paths (120a, 120b).

8. The transmission system according to claim 7, wherein the path protection mechanism of the transport network portion (120) is adapted to provide information regarding the status of the transmission paths (120a, 120b) to the switching component (130) in order to select the appropriate transmission path (120a, 120b) for routing the data.

9. The transmission system according to claim 8, wherein the switching component (130) is adapted to select a switching state based on the information regarding the status of the transmission paths (120a, 120b) and the information regarding the link status of the at least one Ethernet interface (111a, 112a).

10. The transmission system according to anyone of the preceding claims 7 to 9, wherein information regarding the link status of an Ethernet interface (111a, 112a) of the Ethernet network portion (110) is provided to the path protection component of the transport network portion (120) in order to influence the selection of an appropriate transmission path (120a, 120b) for routing the data.

11. Method for transmitting data using a transmission system (100) comprising an Ethernet network portion (110), a transport network portion (120) and a switching component (130) coupling said Ethernet network portion (110) with said transport network portion (120), wherein the Ethernet network portion (110) comprises at least two Ethernet line cards (111, 112), each Ethernet line card with at least one Ethernet interface (111a, 112a) for providing redundant communication links within the Ethernet network portion (110), the method being **characterized by** comprising the steps of:
- transmitting information regarding the link status of the at least one Ethernet interface (111a, 112a) from the Ethernet line card (111, 112) to the switching component (130); and
- receiving and analyzing the information regarding the link status of the at least one Ethernet interface (111a, 112a) by the switching component (130) and routing the data to the transport network portion (120) based on said received information.

12. The method according to claim 11, further comprising embedding information regarding the link status of the at least one Ethernet interface (111a, 112a) into an overhead section of synchronous data units by the Ethernet line cards (111, 112), extracting the information regarding the link status of the at least one Ethernet interface (111a, 112a) from the overhead section of the synchronous data units by the switching component (130) and routing the data units to transport network interfaces (121b, 122b) of the transport network portion (120) based on said extracted information.

13. The method of claim 11 or 12, wherein the transport network portion (120) comprises at least two redundant transport network interfaces (121b, 122b) for providing redundant transmission paths (120a, 120b), the method further comprising determining information regarding the status of the transport network interfaces (121b, 122b) and selecting a transmission path (120a, 120b) for routing of data by the switching component (130) based on information regarding the status of the transport network interfaces (121b, 122b).

14. The method according to any of claims 11 to 13, wherein the switching component (130) evaluates the information, regarding the status of the transport network interfaces (121b, 122b) and the information regarding the link status of the at least one Ethernet interface (111a, 112a) in order to choose an appropriate switching state.

15. The method according to any of claims 11 to 14, comprising forwarding information regarding the link status of an Ethernet interface (111a, 112a) of the Ethernet network portion (110) to the path protection component of the transport network portion (120) and selecting an appropriate transmission path (120a, 120b) based on the information regarding the link status of an Ethernet interface (111a, 112a).

## Patentansprüche

1. Übertragungssystem (100) für das Übertragen von Daten, einen Ethernetnetzwerkanteil (110), einen Transportnetzwerkanteil (120) und eine Schaltkomponente (130) umfassend, die besagten Ethernetnetzwerkanteil (110) mit besagtem Transportnetzwerkanteil (120) koppelnd;
wobei der Ethernetnetzwerkanteil (110) mindestens zwei Ethernetleitungskarten (111, 112) mit mindestens einer Ethernetschnittstelle (111a, 112a) pro Ethernetleitungskarte zwecks Bereitstellung redundanter Kommunikationsverbindungen innerhalb des Ethernetnetzwerkanteils (110) umfasst;
wobei die Ethernetleitungskarten (111, 112) **dadurch gekennzeichnet sind, dass** sie konfiguriert sind für das Übertragen von Informationen hinsichtlich des Linkzustands ihrer mindestens einen Ethernetschnittstelle (111a, 112a) an die Schaltkomponente (130); und
wobei die Schaltkomponente (130) konfiguriert ist für das Empfangen und Analysieren von Informationen hinsichtlich des Linkzustand der Ethernetschnittstellen (111a, 112a) der Ethernetleitungskarten (111, 112) sowie für das Routen von Daten an den Transportnetzwerkanteil (120) auf der Grundlage der empfangenen Informationen.

2. Das Übertragungssystem nach Anspruch 1, wobei die Ethernetleitungskarten (111, 112) jeweils eine Linküberwachungskomponente (220) umfassen, die ausgelegt sind für das Überwachen des Linkzustand der mindestens einen Ethernetschnittstelle.

3. Das Übertragungssystem nach Anspruch 2 wobei die Linküberwachungskomponente (220) ausgelegt ist für den Austausch von Informationen hinsichtlich des Linkzustands der mindestens einen Ethernetschnittstelle (111a, 112a) mit der mindestens einen weiteren Ethernetleitungskarte.

4. Das Übertragungssystem nach einem jeglichen der vorgenannten Ansprüche, wobei jede Ethernetleitungskarte (111, 112) eine Mapperkomponente (230) umfasst, die ausgelegt ist für das Mappen empfangener Ethernet-Nutzlastdaten in synchrone Dateneinheiten.

5. Das Übertragungssystem nach Anspruch 4, wobei die Mapperkomponente (230) konfiguriert ist für den Empfang von Informationen hinsichtlich des Linkzustand der mindestens einen Ethernetschnittstelle (111a, 112a) von der Linküberwachungskomponente (220) und für das Einbetten besagter Informationen in einem Overhead-Abschnitt der zu übertragenden Dateneinheiten.

6. Das Übertragungssystem nach Anspruch 5, wobei die Schaltkomponente (230) ausgelegt ist für das Extrahieren der Informationen hinsichtlich des Linkzustand der mindestens einen Ethernetschnittstelle (111a, 112a) aus dem Overhead-Abschnitt der Dateneinheiten und für das Routen der Dateneinheiten an den Transportnetzwerkanteil (120) auf der Grundlage besagter extrahierter Informationen.

7. Das Übertragungssystem nach einem jeglichen der vorgenannten Ansprüche, wobei der Transportnetzwerkanteil (120) mindestens zwei redundante Übertragungspfade (120a, 120b) umfasst und wobei der Transportnetzwerkanteil (120) eine Pfadschutzkomponente umfasst, die einen Pfadschutzmechanismus bereitstellt, welcher Informationen zum Zustand der Übertragungspfade (120a, 120b) bereitstellt.

8. Das Übertragungssystem nach Anspruch 7, wobei besagter Pfadschutzmechanismus des Transportnetzwerkanteils (120) ausgelegt ist für das Bereitstellen von Informationen zum Zustand der Übertragungspfade (120a, 120b) an die Schaltkomponente (130) zur Auswahl des geeigneten Übertragungspfads (120a, 120b) für das Routen der Daten.

9. Das Übertragungssystem nach Anspruch 8, wobei die Schaltkomponente (130) ausgelegt ist für das Auswählen eines Schaltzustand auf der Grundlage der Informationen zum Zustand der Übertragungspfade (120a, 120b) und der Informationen zum Linkzustand der mindestens einen Ethernetschnittstelle (111a, 112a).

10. Das Übertragungssystem nach einem jeglichen der vorgenannten Ansprüche 7 bis 9, wobei der Pfadschutzkomponente des Transportnetzwerkanteils (120) Informationen zum Linkzustand der Ethernetschnittstelle (111a, 112a) des Ethernetnetzwerkanteils (110) bereitgestellt werden, um die Auswahl eines geeigneten Übertragungspfads (120a, 120b) für das Routen der Daten zu beeinflussen.

11. Verfahren für das Übertragen von Daten unter Verwendung eines Übertragungssystems (100), welches einen Ethernetnetzwerkanteil (110), einen Transportnetzwerkanteil (120) und eine Schaltkomponente (130) umfasst, welche besagten Ethernetnetzwerkanteil (110) mit besagtem Transportnetzwerkanteil (120) koppelt, wobei der Ethernetnetzwerkanteil (110) mindestens zwei Ethernetleitungskarten (111, 112) umfasst, wobei jede Ethernetleitungskarte mindestens eine Ethernetschnittstelle (111a, 112a) für das Bereitstellen redundanter Kommunikationslinks innerhalb des Ethernetnetzwerkanteils (110) umfasst, wobei das Verfahren **dadurch gekennzeichnet ist, dass** es die folgenden Schritte umfasst:
- das Übertragen von Informationen hinsichtlich des Linkzustand der mindestens einen Ethernetschnittstelle (111a, 112a) von der Ethernetleitungskarte (111, 112) an die Schaltkomponente (130); und
- den Empfang und das Analysieren der Informationen zum Linkzustand der mindestens einen Ethernetschnittstelle (111a, 112a) durch die Schaltkomponente (130) und das Routen der Daten an den Transportnetzwerkanteil (120) auf der Grundlage der besagten, empfangenen Informationen.

12. Das Verfahren nach Anspruch 11, weiterhin das Einbetten von Informationen zum Linkzustand der mindestens einen Ethernetschnittstelle (111a, 112a) in einen Overhead-Abschnitt synchroner Dateneinheiten durch die Ethernetleitungskarten (111, 112), das Extrahieren der Informationen zum Linkzustand der mindestens einen Ethernetschnittstelle (111a, 112a) aus dem Overhead-Abschnitt der synchronen Dateneinheiten durch die Schaltkomponente (130) und das Routen der Dateneinheiten an Transportnetzwerkschnittstellen (121b, 122b) des Transportnetzwerkanteils (120) auf der Grundlage der besagten, extrahierten Informationen umfassend.

13. Das Verfahren nach Anspruch 11 oder 12, wobei der Transportnetzwerkanteil (120) mindestens zwei redundante Transportnetzwerkschnittstellen (121b, 122b) für das Bereitstellen redundanter Übertragungspfade (120a, 120b) umfasst, wobei das Verfahren weiterhin umfasst, Informationen zum Zustand der Transportnetzwerkschnittstellen (121b, 122b) zu bestimmen und auf der Grundlage der Informationen zum Zustand der Transportnetzwerkschnittstellen (121b, 122b) einen Übertragungspfad (120a, 120b) für das Routen von Daten durch die Schaltkomponente (130) auszuwählen.

14. Das Verfahren nach einem jeglichen der Ansprüche 11 bis 13, wobei die Schaltkomponente (130) die Informationen zum Zustand der Transportnetzwerkschnittstellen (121b, 122b) und die Informationen zum Linkzustand der mindestens einen Ethernetschnittstelle (111a, 112a) evaluiert, um den geeigneten Schaltzustand auszuwählen.

15. Das Verfahren nach einem jeglichen der Ansprüche 11 bis 14, das Weiterleiten von Informationen zum Linkzustand einer Ethernetschnittstelle (111a, 112a) des Ethernetnetzwerkanteils (110) an die Pfadschutzkomponente des Transportnetzwerkanteils (120) und das Auswählen eines geeigneten Übertragungspfads (120a, 120b) auf der Grundlage der Informationen zum Linkzustand einer Ethernetschnittstelle (111a, 112a) umfassend.

## Revendications

1. Système de transmission (100) pour transmettre des données, comprenant une partie de réseau Ethernet (110), une partie de réseau de transport (120) et un composant de commutation (130) couplant ladite partie de réseau Ethernet (110) avec ladite partie de réseau de transport (120) ;
la partie de réseau Ethernet (110) comprenant au moins deux cartes de ligne Ethernet (111, 112), chaque carte de ligne Ethernet avec au moins une interface Ethernet (111a, 112a), pour fournir des liaisons de communication redondantes à l'intérieur de la partie de réseau Ethernet (110) ;
les cartes de ligne Ethernet (111, 112) **caractérisées en ce qu'**elles sont configurées pour transmettre des informations concernant le statut de liaison de leur au moins une interface Ethernet (111a, 112a) au composant de commutation (130) ; et
le composant de commutation (130) étant configuré pour recevoir et analyser des informations concernant le statut de liaison des interfaces Ethernet (111a, 112a) des cartes de ligne Ethernet (111, 112) et router des données vers la partie de réseau de transport (120) sur la base desdites informations reçues.

2. Système de transmission selon la revendication 1, dans lequel les cartes de ligne Ethernet (111, 112) comprennent chacune un composant de surveillance de liaison (220) adapté pour surveiller le statut de liaison de la au moins une interface Ethernet.

3. Système de transmission selon la revendication 2, dans lequel le composant de surveillance de liaison (220) est adapté pour échanger des informations concernant le statut de liaison de la au moins une interface Ethernet (111a, 112a) avec la au moins une autre carte de ligne Ethernet.

4. Système de transmission selon l'une quelconque des revendications précédentes, dans lequel chaque carte de ligne Ethernet (111, 112) comprend un composant mappeur (230) adapté pour mapper des données de charge utile Ethernet reçues dans des unités de données synchrones.

5. Système de transmission selon la revendication 4, dans lequel le composant mappeur (230) est configuré pour recevoir des informations concernant le statut de liaison de la au moins une interface Ethernet (111a, 112a) en provenance du composant de surveillance de liaison (220) et incorporer lesdites informations dans une section de surdébit des unités de données à transmettre.

6. Système de transmission selon la revendication 5, dans lequel le composant de commutation (230) est adapté pour extraire les informations concernant le statut de liaison de la au moins une interface Ethernet (111a, 112a) de la section de surdébit des unités de données et router les unités de données vers la partie de réseau de transport (120) sur la base desdites informations extraites.

7. Système de transmission selon l'une quelconque des revendications précédentes, dans lequel la partie de réseau de transport (120) comprend au moins deux trajets de transmission redondants (120a, 120b), et la partie de réseau de transport (120) comprend un élément de protection de trajet fournissant un mécanisme de protection de trajet fournissant des informations concernant le statut des trajets de transmission (120a, 120b).

8. Système de transmission selon la revendication 7, dans lequel le mécanisme de protection de trajet de la partie de réseau de transport (120) est adapté pour fournir des informations concernant le statut des trajets de transmission (120a, 120b) au composant de commutation (130) afin de sélectionner le trajet de transmission approprié (120a, 120b) pour router les données.

9. Système de transmission selon la revendication 8, dans lequel le composant de commutation (130) est adapté pour sélectionner un état de commutation sur la base des informations concernant le statut des trajets de transmission (120a, 120b) et des informations concernant le statut de liaison de la au moins une interface Ethernet (111a, 112a).

10. Système de transmission selon l'une quelconque des revendications 7 à 9 précédentes, dans lequel des informations concernant le statut de liaison d'une interface Ethernet (111a, 112a) de la partie de réseau Ethernet (110) sont fournies à l'élément de protection de trajet de la partie de réseau de transport (120) afin d'influencer la sélection d'un trajet de transmission approprié (120a, 120b) pour router les données.

11. Procédé pour transmettre des données en utilisant un système de transmission (100) comprenant une partie de réseau Ethernet (110), une partie de réseau de transport (120) et un composant de commutation (130) couplant ladite partie de réseau Ethernet (110) avec ladite partie de réseau de transport (120), la partie de réseau Ethernet (110) comprenant au moins deux cartes de ligne Ethernet (111,112), chaque carte de ligne Ethernet avec au moins une interface Ethernet (111a, 112a) pour fournir des liaisons de communication redondantes à l'intérieur de la partie de réseau Ethernet (110), le procédé étant **caractérisé en ce qu'**il comprend les étapes suivantes :
- transmettre des informations concernant le statut de liaison de la au moins une interface Ethernet (111a, 112a) de la carte de ligne Ethernet (111, 112) au composant de commutation (130) ; et
- recevoir et analyser les informations concernant le statut de liaison de la au moins une interface Ethernet (111a, 112a) par le composant de commutation (130) et router les données vers la partie de réseau de transport (120) sur la base desdites informations reçues.

12. Procédé selon la revendication 11, comprenant en outre l'incorporation d'informations concernant le statut de liaison de la au moins une interface Ethernet (111a, 112a) dans une section de surdébit d'unités de données synchrones par les cartes de ligne Ethernet (111, 112), l'extraction des informations concernant le statut de liaison de la au moins une interface Ethernet (111 a, 112a) de la section de surdébit des unités de données synchrones par le composant de commutation (130) et le routage des unités de données vers des interfaces de réseau de transport (121b, 122b) de la partie de réseau de transport (120) sur la base desdites informations extraites.

13. Procédé selon la revendication 11 ou 12, dans lequel la partie de réseau de transport (120) comprend au moins deux interfaces de réseau de transport redondantes (121b, 122b) pour fournir des trajets de transmission redondants (120a, 120b), le procédé comprenant en outre la détermination d'informations concernant le statut des interfaces de réseau de transport (121b, 122b) et la sélection d'un trajet de transmission (120a, 120b) pour le routage de données par le composant de commutation (130) sur la base d'informations concernant le statut des interfaces de réseau de transport (121b, 122b).

14. Procédé selon l'une quelconque des revendications 11 à 13, dans lequel le composant de commutation (130) évalue les informations concernant le statut des interfaces de réseau de transport (121b, 122b) et les informations concernant le statut de liaison de la au moins une interface Ethernet (111a, 112a) afin de choisir un état de commutation approprié.

15. Procédé selon l'une quelconque des revendications 11 à 14, comprenant le transfert d'informations concernant le statut de liaison d'une interface Ethernet (111a, 112a) de la partie de réseau Ethernet (110) au composant de protection de trajet de la partie de réseau de transport (120) et la sélection d'un trajet de transmission approprié (120a, 120b) sur la base des informations concernant le statut de liaison d'une interface Ethernet (111a, 112a).
